# EUROPEAN PATENT SPECIFICATION

(11) **EP 0 924 780 B1**
(45) Date of publication and mention of the grant of the patent: **11.07.2001**
(21) Application number: 98123315.8
(22) Date of filing: 08.12.1998
(51) Int. Cl.: H01M 2/16, B01D 69/12, B32B 27/32, B01D 67/00, B32B 31/00

(54) **Penta-layer battery separator**
Fünflagiger Batterieseparator
Séparateur de batterie en cinq couches

(30) Priority: 19.12.1997 US 995205
(43) Date of publication of application: 23.06.1999
(73) Proprietor: Celgard Inc., Burlington, Massachusetts 0183 (US)
(72) Inventor: Yu, Wei-Ching, Gastonia, North Carolina 28056 (US); Nguyen, Khuy V., Charlotte, North Carolina 28217 (US); Hux, Shawn E., Gastonia, North Carolina 28056 (US); Cook, Pierre C., Concord, North Carolina 28027 (US); Call, Ronald W., Rock Hill, South Carolina 29732 (US)
(74) Representative: von Kreisler, Alek, Dipl.-Chem.

(56) References cited:
- EP-A- 0 365 112
- EP-A- 0 682 376
- WO-A-93/13565
- US-A- 5 691 077
- PATENT ABSTRACTS OF JAPAN vol. 097, no. 001, 31 January 1997 & JP 08 250097 A (KUREHA CHEM IND CO LTD), 27 September 1996

## Description

### Field of the Invention

The invention is directed to a penta-layer shutdown battery separator.

### Background of the Invention

A battery normally comprises electrodes, electrolyte, and a battery separator. Battery separators are located between the anode and cathode in a battery to prevent direct contact between electrodes of opposite polarity and to contain electrolyte.

In lithium batteries which are increasingly popular, short circuiting is a problem as it tends to cause thermal runaway and battery rupture. Thus, shutdown separators have been developed to cope with this problem. For example, see: US Patent No. 4,650,730 and US Patent No. 4,731,304. A shutdown battery separator is a microporous membrane which closes its pores at some temperature well below the melting and/or ignition point of lithium to minimize the negative impact of thermal runaway.

In addition to the shutdown function, a microporous shutdown separator should also be thin enough to minimize the space it occupies in the battery and to reduce electrical resistance. Moreover, the shutdown separator must also have sufficient resistance to splitting, and puncture strength. These two attributes are essential during handling or manufacture.

Microporous membranes made of polypropylene generally have higher puncture strength; but, they melt at temperatures too near the melting point of lithium. On the other hand, polyethylene membranes generally have low melting temperatures but low puncture strength. Thus, trilayer shutdown batteries were developed comprising both microporous polypropylene and polyethylene membranes. See: Japanese Patent Application Nos. 98395/1994 and 98394/1994 both filed May 20, 1994 by Ube Industries, Ltd. (the Ube trilayer separator); U.S. Patent No. 5,691,077 by Hoechst Celanese Corporation (the CELGARD® separator); Japanese Patent Application No. 55550/1995 filed March 15, 1995 by Nitto Denko Kogyo K.K. (the Nitto Denko trilayer separator); and Japanese Patent Application No. 56320/1995 filed March 15, 1995 by Kureha Chemical Industry Co., Ltd. (the Kureha trilayer separator).

All of foregoing claim trilayer battery separators comprising two layers of microporous polypropylene membrane sandwiching one layer of microporous polyethylene membrane. In addition, the Ube \ applications also disclose that porous laminate film can be obtained by stretching a laminate film of three or more alternate layers of polypropylene and polyethylene.

One problem with trilayer battery separators is that they are prone to splitting, i.e., the tearing of the separator during handling or battery manufacture. Split separators are ineffective in preventing thermal runaway. Thus, if the separator splits, the battery is defective. In addition, it was observed that when samples of trilayer membranes are punctured by a needle, the membranes fail starting from the transverse direction, which indicates that the tendency to split also reduces the puncture strength of the membrane. Therefore, there is need to increase resistance to splitting in shutdown separators.

### Summary of the Invention

This invention provides a battery separator of improved resistance to splitting and puncture strength having five microporous membranes laminated together. The first, third, and fifth membranes are strength layers, and preferably are polypropylene. The second and fourth layers are shutdown layers, and preferably are polyethylene. The present invention is based on the discovery that a penta-layer separator having a construction of polypropylene-polyethylene-polypropylene-polyethylene-polypropylene has much greater resistance to splitting than a trilayer separator having a polypropylene-polyethylene-polypropylene construction with the same thickness.

### Description of the Figures

For the purpose of explaining the invention, there is shown in the drawings various preferred aspects of the invention; it being understood, however, that this invention is not limited to the precise arrangements and instrumentalities shown.

Figure 1 illustrates the construction of the penta-layer battery separator of this invention.

Figure 2 is a schematic illustration of a deplying and penta-layer formation setup.

Figure 3 shows the oven string-up for co-bonding and co-annealing the penta-layer precursor.

Figure 4 illustrates the oven string-up for stretching the co-bonded and co-annealed penta-layer precursor.

### Description of the Invention

The present invention shall be described in further detail below by way of the following detailed description and the non-limiting examples.

A battery is an electrochemical device that generates electric current by converting chemical energy to electrical energy. Its essential components are: positive and negative electrodes made of more or less electrically conductive materials; a separator; and an electrolyte. Batteries may be either primary (non-reversible or disposable) or secondary (reversible or rechargeable). The electrolyte may be aqueous or non-aqueous. Batteries are typically either spiral wound or prismatical (rectangular). These shapes are indicative of their method of manufacture. In the present invention, the preferred battery is lithium battery. The most preferred battery is a lithium ion secondary battery.

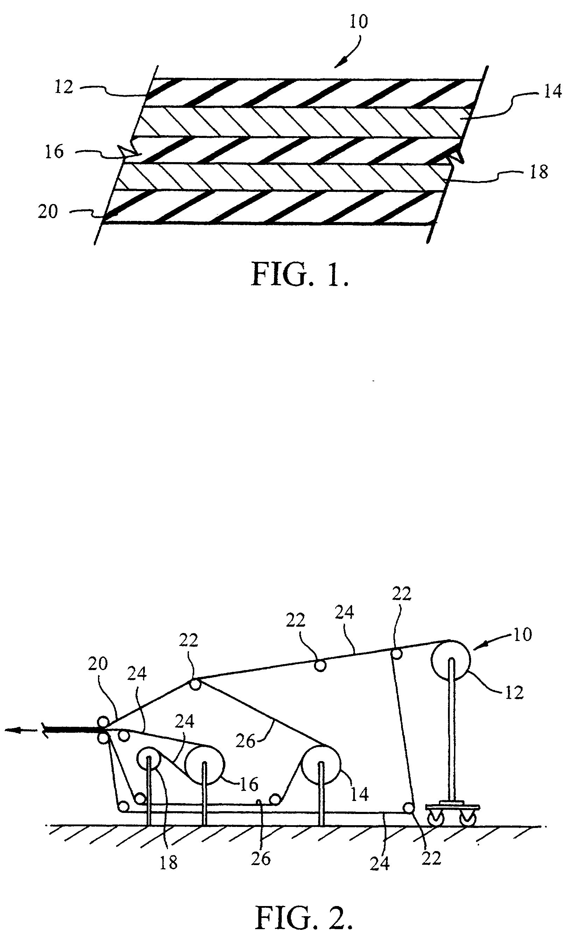

Figure 1 illustrates a preferred embodiment of shutdown battery separator 10 which comprises a microporous film for use in electrochemical cells, e.g., batteries, particularly rechargeable batteries, such as lithium batteries. This penta-layer separator has five microporous membranes stacked together. The first (12), third (16) and fifth (20) membranes, i.e., the two outer layers and the center layer, are strength layers. The second (14) and fourth (18) membranes are shutdown layers. The shutdown layers are capable of melting and filling the pores at a temperature (shutdown temperature) substantially below the melting point of the strength layers. Thus, when the micropores collapse at the shutdown temperature, the strength layers retain substantially their elastic energy and thus maintain the integrity of the separator in the event of short circuit and prevent the ion flow between the electrodes.

The strength layers can be composed of, for example, a polyolefin such as polypropylene or a blend comprising substantially polypropylene or copolymer of polypropylene. An exemplary polypropylene is Fina PP 3271 resin commercially available from Fina Oil and Chemical Company, Dallas TX. The shutdown layers can be composed of polyethylene or a blend comprising substantially polyethylene or a copolymer comprising substantially polyethylene. An exemplary polyethylene is Fina HDPE 7208 resin commercially available from Fina Oil and Chemical Company, Dallas TX. Thus, the preferred embodiment of the invention has a polypropylene-polyethylene-polypropylene-polyethylene-polypropylene construction. The separator has a thickness of less than 2 mils (about 50 µm) preferably less than about 1.7 mil (about 42 µm) and more preferably has a thickness of less than about 1 mil (about 25 µm). The permeability of the separator, as measured by Gurley, is less than about 50 seconds, and preferably less than about 40 seconds. The puncture strength of the separator is more than about 4.6N (470 grams-force (gf)), preferably more than 4.9N (500 gf).

The penta-layer battery separator in accordance with the present invention has improved puncture strength and resistance to splitting. For example, a 25.4 µm (1 mil) thick trilayer separator of polypropylene-polyethylene-polypropylene construction prepared by laminating PP and PE CELGARD® membranes has a puncture strength of about 4.4N (450 gf). Surprisingly, a 25.4 µm (1 mil) penta-layer separator in accordance with the present invention has a puncture strength of about 5.1 N (520 gf), which is about 15% higher than a polypropylene-polyethylene-polypropylene separator with the same thickness of 25.4 µm (1-mil). As is known to a person skilled in the art, it is important to have thin separators, so that the electrical resistance across the separator, as well as, the size of the battery, may be reduced. Therefore, this invention, by increasing resistance to splitting without sacrificing the thinness, has great significance to battery separator manufacture.

The penta-layer separator of this invention can be made using any of the various methods generally known in the art for making microporous films or shutdown battery separators. The strength layers and the shutdown layers can be co-extruded or extruded separately. They can be bonded and annealed together before being converted to porous structure. Individual membranes can also be made porous and subsequently bonded and annealed into the penta-layer separator of this invention. The individual membranes may also be crossplied (i.e., see, U.S. Patent No. 5,667,911).

In the case of separate extrusion, preferably, a penta-layer separator is made in the following steps: extruding a non-porous strength layer precursor; extruding a non-porous shutdown layer precursor; forming a non-porous penta-layer precursor; bonding the penta-layer precursor; annealing the penta-layer precursor; and stretching the bonded and annealed, non-porous penta-layer precursor to form the microporous penta-layer shutdown separator.

The methods for extruding non-porous precursor layers, which are thicker than the membranes in this invention, are disclosed in, by way of non-limiting example, U.S. Patent Nos.: 3,426,754; 3,558, 764; 3,679,538; 3,801,404; 3,801,692; 3,843,761; 3,853,601; 4,138,459; 4,539,256; 4,726,989; 4,994,335, and 5,691,077.

In the preferred extrusion methods in the present invention: (1) a 1.02 mm (40 mil) die gap in, e.g., a 68.6cm (27") width die is used for making the polypropylene and polyethylene precursors of the less than 25.4 µm (1-mil) penta-layer, whereas a 1.78 mm (70 mil) die gap is used for the precursors of thicker penta-layers; (2) a die temperature for extruding the polypropylene precursor is in the range of 224°C (for 9.4 µm (0.37 mil) polypropylene precursor) to 234°C (for 6.1µm (0.24 mil) polypropylene precursor); (3) the die temperature for polyethylene precursors is in the range of 200°C (for 9.7µm (0.38 mil) precursor) to 210°C (for 5.6 µm (0.22 mil) precursor); (4) the barrel temperature is in the range of 200°C (for polyethylene) to 210°C (for polypropylene).

The penta-layer precursor may be formed as shown in scheme 10 of Figure 2. The polypropylene precursors 24 are unwound from unwind stations 12 and 16. The polyethylene precursors 26 are unwound from unwind station 14. Two plies are supplied from each roll supported by an unwind station. Guide rollers 22 are used to assist in deplying the precursors. Only one ply supplied by the unwind station 16 is used in the formation of the penta-layer precursor. The other ply is rewound onto the roll supported by rewind station 18. The penta-layer precursor 20 is forwarded to the next processing operation (not shown).

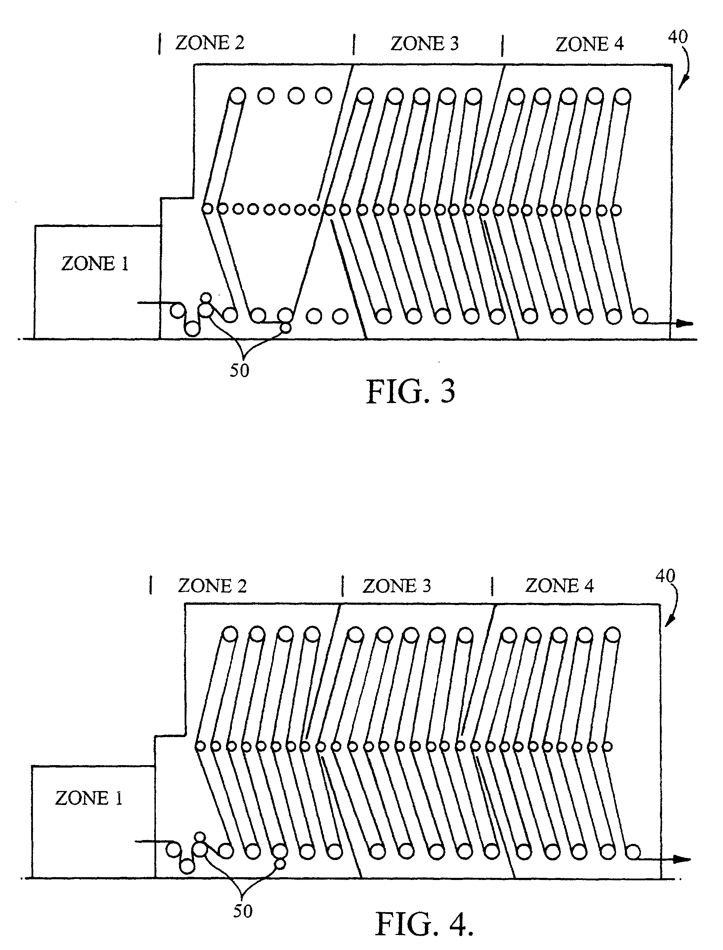

After the extrusion, the non-porous films may be bonded and annealed before stretching. Co-bonding and co-annealing of the trilayer precursor may be performed in a multizone oven 40 of Figure 3, in which each zone is capable of maintaining a distinct temperature. Bonding is for joining together the single layers in the polypropylene-polyethylene-polypropylene-polyethylene- \ polypropylene precursors. Bonding may be performed at a temperature ranging from 125-135°C between nip rollers 50. Preferably, bonding is performed at a temperature ranging from 128-130°C. The annealing step is used to form crystal structures in the polymers to facilitate pore formation in the later stretching step. Annealing is influenced by temperature and time. Annealing of the penta-layer precursor should be performed at temperatures ranging from 105-135°C, preferably from about 110-130°C.

Following the bonding and annealing steps, the penta-layer precursor is stretched a multizone oven 40 of Figure 4. Stretching the bonded and annealed penta-layer precursor causes the formation of micropores in the structure of the separator precursors. Stretching can include several steps, e.g., a cold drawing step, a hot drawing step, and a relax or heat-treating step. The relax or heat-treating step is to reduce internal stress within the separator and may be accomplished with either negative draw ratio or substantially no draw tension at various heat profiles. Stretching can be a continuous process performed in ovens containing draw frame.

The cold drawing step can be conducted at ambient temperature and at a draw ratio in the range of 10-40%, preferably 15-25%. The hot drawing step can be conducted at temperatures ranging from 110-125°C, preferably 115-123°C, and at draw ratios ranging from 105-130%, preferably 110-125%. The relax or heat-treating step is conducted at temperatures ranging from 110-125°C and at a draw ratio in the range of -15% to -50%, preferably 115-123°C and at a draw ratio in the range of -20 to -40%.

After stretching, the penta-layer battery separators are slit to desired widths and wound up into rolls.

Alternatively, the penta-layer battery separator of this invention can be made by other methods generally known in the art for making two or three-layer shutdown battery separators with necessary modifications. The modifications needed should be apparent to a person skilled in the art in view of the method detailed above. Examples of suitable methods include, but not limited to: (1) co-stretching the bonded and annealed non-porous films that are separately extruded; (2) forming porous precursors before bonding them into penta-layer separators; and (3) stretching a co-extruded penta-layer precursor. These methods are disclosed in the following patents and patent applications:

U.S. Pat. Nos.: 4,650,730; 4,471,304; 5,240,655; 5,281,491; 5,667,911; 5,565,281; Japanese Applications JP 98394/1994; 98395/1994; 7-56320; and UK Application GB 2298817.

In addition, cross-plied penta-layer microporous membranes comprising first, third and fifth microporous polypropylene membranes and second and forth microporous polyethylene membranes may also be made by cross-ply laminating the microporous membranes such that at least one layer is angularly oriented relative to at least another layer. Methods of making cross-ply microporous battery separator are disclosed in U.S. Patent No. 5,667,911.

The invention is further illustrated with reference to the examples set forth below. In the examples, the following methods are employed to for testing:

| Test Methods | |
|---|---|
| Gurley | ASTM-D726(B) |
| | Gurley is a resistance to air flow measured time in seconds required to pass 10cc of air through 6.45 cm² (one square inch) of product under a pressure 31.0cm (12.2 inches) of water. |
| | |
| Thickness | T411om-83 developed under the auspices of the Technical Association of the Pulp and Paper Industry. Thickness is determined using a precision micrometer with a 1,27cm (1/2 inch) diameter, circular shoe contacting the sample at seven 48 kPa ((7) PSI). Ten (10) individual micrometer readings taken across the width of the sample are averaged. |
| | |
| Porosity | ASTM D-2873 |
| | |
| Puncture Strength | Ten measurements are made across the width of the stretched product and averaged. A Mitech Stevens LFRA Texture Analyzer is used. The needle is 1.65 mm in diameter with 0.5 mm radius. The rate of descent is 2 mm/sec and the amount of deflection is 6 mm. The film is held tight in the clamping device with a central hole of 11.3 mm. The displacement (in mm) of the film that was pierced by |
| | the needle was recorded against the resistance force 0.0098N (in gram force) developed by the tested film. The maximum resistance force is the puncture strength. |
| | |
| Peel Strength | Peel strength is measured using a tension and compression tester to determine the force in 0.0098N (grams) required to separate two 2.54 cm (one-inch) wide sections of bonded membrane. The peel rate is 15.24 cm/min (6 inches/minute). Three measurements are taken across the web and averaged. |
| | |
| Shrinkage | The sample in the machine direction is marked Lᵢ (Lᵢ = 9.99cm) apart, and then suspended in a convection oven set at 90°C for one hour. After taking out of the oven, the sample is then measured the distance, L_{f}, between the marks. The shrinkage is calculated as follows: (%) Shrinkage = (Lᵢ - L_{f}) X 100/L_{f}. |

### Example 1

The polyethylene precursor was extruded from Fina HDPE 7208 resin with a 1.02 mm (40-mil) die gap set-up to form a 0.22 mil (about 5.5 µm) thick film. The polypropylene precursor was extruded from Fina PP3271 resin with a 1.02 mm (40-mil) die gap set-up to form a 0.24 mil (about 6.0 µm) thick film. The penta-layer precursor was formed as shown in Figure 2.

The bonding and annealing of the precursor was accomplished as follows: the precursor was strung-up with the oven configured as in Figure 3; the oven 40 has 4 zones. The nip rollers 50 are located in zone 2. Zones 2 was set at a temperature of 128°C or 130°C. Zone 3 and 4 were set at a temperature of 110°C. The line speed was 12.2 m/min. (40 ft/min). The pentalayer precursor was then stretched under various conditions to yield the penta-layer separator. The results are set forth in Table 1.

**TABLE 1**

| Trial # | Gurley ± range, sec | Thickness ±σ, 25.4µm (mil) | Shrinkage % | Puncture Strength, ±σ, 0.0098 N (gf) | Base Weight, mg/cm² | Roll Length,(30.48cm) (ft) |
|---|---|---|---|---|---|---|
| 1 | 43.4+4.3 | 1.05+0.04 | 1.3 | | 1.61 | 700 |
| 2 | 39.4+6.5 | 1.02+0.03 | 1.3 | 516+44 | 1.59 | 700 |
| 3 | 40.3+1.8 | 1.05+0.02 | 1.3 | | 1.57 | 700 |
| 4 | 41.2+7.7 | 1.00+0.04 | 1.3 | | 1.57 | 700 |
| 5 | 34.1+5.4 | 1.03+0.03 | 1.2 | | 1.55 | 700 |
| 6 | 33.0+4.2 | 1.01+0.04 | 1.3 | | 1.52 | 700 |
| 7 | 36.3+7.0 | 1.05+0.03 | 1.4 | | 1.54 | 700 |
| 8 | 35.2+8.4 | 1.01+0.02 | 1.2 | | 1.53 | 700 |
| 9 | 35.1+4.0 | 1.04+0.03 | 1.5 | 527+32 | 1.58 | 1600 |
| 10 | 34.3+3.4 | 1.05+0.08 | 1.4 | | 1.60 | 1600 |
| 11 | 34.0+6.0 | 1.02+0.02 | 1.5 | | 1.58 | 1600 |
| 12 | 36.0+5.0 | 1.04+0.03 | 1.4 | | 1.61 | 1600 |
| Where σ is standard deviation | | | | | | |

### Example 2

The polyethylene precursor was extruded from Fina HDPE 7208 resin up to form a 0.38 mil (about 9.5 µm) thick film. The polypropylene precursor was extruded from Escorene PP 4292 resin to form a 0.37 mil (about 9.25 µm) thick film. The penta-layer precursor was formed as shown in Figure 2.

The bonding and annealing of the precursor was accomplished as follows: the precursor was strung-up with the oven configured as in Figure 3. The oven 40 of Figure 3 has 4 zones. The nip rollers 50 are located in zone 2. Zones 2 was set at a temperature of 128°C or 130°C. Zone 3 and 4 were set at a temperature of 110°C. The line speed was 12.2 m/min (40 ft/min). The pentalayer precursor was then stretched under various conditions to yield the penta-layer separator. The results are set forth in Table 2.

**TABLE 2**

| Trial # | Gurley ± range, sec | Thickness ±σ, (mil) 25,4µm | Shrinkage % | Puncture Strength, ±σ (0,0098 N) (gf) | Base Weight, mg/cm² | Roil Length, (30,48cm) (ft) |
|---|---|---|---|---|---|---|
| 1 | 39.6+9.5 | 1.65+0.02 | 1.3 | | 2.35 | 700 |
| 2 | 44.6+5.9 | 1.65+0.02 | 1.3 | 742+18 | 2.33 | 700 |
| 3 | 38.1+6.2 | 1.66+0.02 | 1.3 | | 2.37 | 700 |
| 4 | 43.4+6.2 | 1.65+0.06 | 1.3 | | 2.32 | 700 |
| 5 | 34.4+4.2 | 1.60+0.04 | 0.8 | | 2.18 | 700 |
| 6 | 35.5+6.0 | 1.59+0.04 | 0.8 | | 2.20 | 700 |
| 7 | 33.2+2.5 | 1.59+0.03 | 0.8 | | 2.18 | 700 |
| 8 | 35.4+9.04 | 1.61+0.03 | 0.8 | | 2.24 | 700 |
| Where σ is standard deviation | | | | | | |

## Claims

1. A battery separator comprising:
five microporous membranes stacked together, wherein the first, third, and fifth membranes are strength layers, and second and fourth membranes are shutdown layers.

2. A battery separator according to claim 1, wherein the first, third and fifth membranes are polypropylene and the second and fourth membranes are polyethylene.

3. A battery separator according to claim 1 or 2 wherein the separator has a thickness of no greater than 25.4 µm (1 mil).

4. A cross-ply microporous penta-layer battery separator comprising:
five microporous membranes stacked together, the first, third and fifth membranes being polypropylene and the second and fourth membranes being polyethylene, wherein the uniaxial orientation of at least one ply is at an angle relative to the uniaxial orientation of at least one other ply.

5. A battery comprising an anode, a cathode, an electrolyte and a separator, the electrolyte being contained in the separator, the anode and the cathode sandwiching the separator, so that the electrolyte is in ion communication therebetween, and the separator of claims 1 or 2 or 4.

6. A method for making a penta-layer separator comprising the step of:
extruding a polyethylene precursor;
extruding a polypropylene precursor;
forming a penta-layer precursor wherein the first, third and fifth membranes are polypropylene precursors, and the second and forth membranes are polyethylene precursors;
simultaneously bonding and annealing the penta-layer precursor to form a bonded and annealed penta-layer precursor;
stretching the bonded and annealed penta-layer precursor; and
forming thereby the battery separator.

7. A method for making a penta-layer battery separator comprising:
forming microporous polypropylene membranes and microporous polyethylene membranes;
laminating said membranes into a penta-layer precursor wherein the first, third and fifth membranes are polypropylene, and the second and forth membranes are polyethylene; and
bonding said penta-layer precursor to form the penta-layer battery separator.

8. A method of making a penta-layer battery separator comprising:
co-extruding a penta-layer precursor wherein the first, third and fifth membranes are polypropylene precursors, and the second and forth membranes are polyethylene precursors;
annealing said penta-layer precursor; and forming microporous structure in the annealed penta-layer precursor.

## Patentansprüche

1. Batterieseparator, umfassend:
fünf mikroporöse, aufeinander geschichtete Membranen, wobei die erste, die dritte und die fünfte Membran Festigkeitsschichten sind und die zweite und die vierte Membran Abschaltschichten sind.

2. Batterieseparator nach Anspruch 1, wobei die erste, die dritte und die fünfte Membran Polypropylen sind und die zweite und die vierte Membran Polyethylen sind.

3. Batterieseparator nach Anspruch 1 oder 2, wobei der Separator eine Dicke von nicht mehr als 25,4 µm (1 mil) hat.

4. Kreuzweise orientierter, mikroporöser, fünfschichtiger Batterieseparator, umfassend:
fünf mikroporöse, aufeinander gestapelte Membranen, wobei die erste, die dritte und die fünfte Membran Polypropylen sind und die zweite und die vierte Membran Polyethylen sind, wobei die uniaxiale Orientierung wenigstens einer Lage einen Winkel zu der uniaxialen Orientierung wenigstens einer anderen Lage aufweist.

5. Batterie, umfassend eine Anode, eine Kathode, einen Elektrolyten und einen Separator, wobei der Elektrolyt in einem Separator enthalten ist und der Separator so zwischen der Anode und der Kathode angeordnet ist, dass der Elektrolyt sich in Ionenkommunikation zwischen diesem und dem Separator der Ansprüche 1 oder 2 oder 4 befindet.

6. Verfahren zur Herstellung eines fünfschichtigen Separators, umfassend die Stufen des:
Extrudierens einer Polyethylen-Vorstufe;
Extrudierens einer Polypropylen-Vorstufe;
Bildens einer fünfschichtigen Vorstufe, wobei die erste, die dritte und die fünfte Membran Polypropylen-Vorstufen sind und die zweite und die vierte Membran Polyethylen-Vorstufen sind;
gleichzeitigen Verbindens und Spannungsfreimachens der fünfschichtigen Vorstufe unter Bildung einer verbundenen und spannungsfrei gemachten fünfschichtigen Vorstufe;
Streckens der verbundenen und spannungsfrei gemachten, fünfschichtigen Vorstufe und des
Bildens des Batterieseparators auf diese Weise.

7. Verfahren zur Herstellung eines fünfschichtigen Batterieseparators, umfassend:
die Bildung von mikroporösen Polypropylenmembranen und mikroporösen Polyethylenmembranen;
das Laminieren der Membranen zu einer fünfschichtigen Vorstufe, wobei die erste, die dritte und die fünfte Membran Polypropylen sind und die zweite und die vierte Membran Polyethylen sind; und
des Verbindens der fünfschichtigen Vorstufe unter Bildung des fünfschichtigen Batterieseparators.

8. Verfahren zur Herstellung eines fünfschichtigen Batterieseparators, umfassend:
das Coextrudieren einer fünfschichtigen Vorstufe, wobei die erste, die dritte und die fünfte Membran Polypropylen-Vorstufen sind und die zweite und die vierte Membran Polyethylen-Vorstufen sind;
das Spannungsfreimachen der fünfschichtigen Vorstufe und das
Bilden der mikroporösen Struktur in der spannungsfrei gemachten fünfschichtigen Vorstufe.

## Revendications

1. Séparateur de pile, comportant :
cinq membranes microporeuses empilées ensemble, les première, troisième et cinquième membranes étant des couches de renfort, et les deuxième et quatrième membranes étant des couches d'arrêt.

2. Séparateur de pile selon la revendication 1, dans lequel les première, troisième et cinquième membranes sont en polypropylène et les deuxième et quatrième membranes sont en polyéthylène.

3. Séparateur de pile selon la revendication 1 ou 2, dans lequel le séparateur a une épaisseur non supérieure à 25,4 *µ*m (1 mil).

4. Séparateur de pile à cinq couches microporeuses en plis croisés, comportant :
cinq membranes microporeuses empilées ensemble, les première, troisième et cinquième membranes étant en polypropylène et les deuxième et quatrième membranes étant en polyéthylène, l'orientation uniaxiale d'au moins un pli formant un angle avec l'orientation uniaxiale d'au moins un autre pli.

5. Pile comportant une anode, une cathode, un électrolyte et un séparateur, l'électrolyte étant contenue dans le séparateur,
l'anode et la cathode encadrant le séparateur, afin que l'électrolyte soit en communication ionique entre elles, et le séparateur des revendications 1 ou 2 ou 4.

6. Procédé pour réaliser un séparateur à cinq couches comprenant les étapes dans lesquelles :
on extrude un précurseur de polyéthylène ;
on extrude un précurseur de polypropylène ;
on forme un précurseur à cinq couches dans lequel les première, troisième et cinquième membranes sont des précurseurs de polypropylène, et les deuxième et quatrième membranes sont des précurseurs de polyéthylène ;
on lie et recuit simultanément le précurseur à cinq couches pour former un précurseur à cinq couches lié et recuit ;
on étire le précurseur à cinq couches lié et recuit ; et
on forme ainsi le séparateur de pile.

7. Procédé pour réaliser un séparateur de pile à cinq couches, comprenant :
la formation de membranes microporeuses en polypropylène et de membranes microporeuses en polyéthylène ;
la stratification desdites membranes en un précurseur à cinq couches dans lequel les première, troisième et cinquième membranes sont en polypropylène et les deuxième et quatrième membranes sont en polyéthylène ; et
la liaison dudit précurseur à cinq couches pour former le séparateur de pile à cinq couches.

8. Procédé pour réaliser un séparateur de pile à cinq couches, comprenant :
la coextrusion d'un précurseur à cinq couches dans lequel les première, troisième et cinquième membranes sont des précurseurs de polypropylène et les deuxième et quatrième membranes sont des précurseurs de polyéthylène ;
le recuit dudit précurseur à cinq couches ; et la formation d'une structure microporeuse dans le précurseur à cinq couches recuit.
